# EUROPEAN PATENT APPLICATION

(11) **EP 4 257 942 A1**
(43) Date of publication of application: **11.10.2023**
(21) Application number: 22166512.8
(22) Date of filing: 04.04.2022
(51) Int. Cl.: G01J 3/52, G01J 3/02, G02B 27/40

(54) **WHITE TRANSFER CAMERA CHECK**

(71) Applicant: X-Rite Europe GmbH, 8105 Regensdorf (CH)
(72) Inventor: Denoth, Schimun, CH-8105 Regensdorf (CH)
(74) Representative: Jonas, Hans-Hermann

(57) **Abstract**

A color measurement instrument for use with a single calibration plaque having a Region of Interest (ROI) and a focus target outside of the ROI, comprising a spectral engine, a camera, a processor, operatively connected to the spectral engine and the camera, and a non-volatile memory operatively connected to the processor, the non-volatile memory having instructions stored thereon, which, when executed by the processor, cause the processor to: activate the spectral engine to obtain a measurement within the ROI; calibrate the spectral engine with the obtained measurement; activate the camera to obtain an image of the calibration plaque including the focus target; calculate a current blur detection value for the focus target by comparing reference calibration measurements and the current measurement; retrieve a predetermined calibration blur detection value from the memory; and determine whether the current blur detection value is within a threshold tolerance of the calibration blur detection value.

## Description

### Background

Spectrophotometers are color measurement instruments capable of highly-precise color measurements. Spot measurement spectrophotometers include a spectral engine having a field of view on the order of 4mm to 12mm. To ensure a high degree of accuracy in the color measurements, spectrophotometers are required to be calibrated from time to time. In some instances, calibration is performed by measuring a white reference calibration tile or plaque having known spectral characteristics.

Many color measurement instruments include cameras for imaging a surface of interest being measured. See, for example, US 2018/0024005, which is incorporated by reference in its entirety. Typically, the field of view of the camera is much larger than the field of view for the spectral engine, and includes the field of view of the spectral engine. In some embodiments, as in the above publication, the camera is a RGB camera which is color-calibrated based on spectral measurements from a spectral engine based on pixels where the two fields of view overlap. In some embodiments, the camera is monochrome.

In the current state of the art, two measurements using two separate tiles are required to calibrate the instrument. In a first calibration step, the color measurement instrument is placed over a white calibration tile, and the spectral engine makes a measurement. The measurement is compared to reference calibration data and the spectral engine is calibrrated. Then, in a separate calibration step, the color measurement instrument is placed over a tile having a checkerboard-like pattern of highly contrasting values, such as black and white squares, and a camera focus verification is made. Currently, the focus check is performed including a camera Region of Interest (camera ROI), the camera ROI encompassing the field of view for the spectral engine. As such, conventional focus check tiles, with focus targets within the ROI, would be unsuitable for use for a white balance calibration by the spectrophotometer.

In some examples, the camera ROI is smaller than the full field of view for the camera. Due to the camera optics and measurement distances, it may be difficult or impossible to bring the full camera field of view into focus. In such cases, the ROI is brought into focus, and the camera field of view outside of the ROI is allowed to be out of focus. Due to this, pixels of the image sensor not corresponding to the ROI are typically not used during measurements.

### Summary

A spectral calibration plaque including a camera focus target pattern is provided. In one example the calibration plaque is for use with a spectrophotometer having a spectral engine and a camera with overlapping fields of view. In another example the calibration plaque is for use with an imaging spectrophotometer.

A combined process for calibrating a spectral engine and a camera of a color measurement involves the color measurement instrument measures a portion of the ROI with the spectral engine. The color measurement instrument uses this measurement to calibrate the spectral engine. The color measurement instrument measures the plaque with the camera. The field of view of the camera includes both the ROI 22 and the focus target. The color measurement instrument calculates a blur detection value by comparing reference calibration measurements and the current measurement. The color measurement instrument compares a reference blur detection value to a current blur detection value. If the current blur detection value is within a threshold tolerance of the calibration blur detection value, the camera is considered in focus. If out of tolerance, the color measurement instrument calibrates the focus of the camera.

In some embodiments, a color measurement instrument for use with a single calibration plaque having a spectral target Region of Interest (ROI) and a focus target outside of the ROI is provided. The color measurement instrument comprises a spectral engine, a camera, a processor, operatively connected to the spectral engine and the camera, and a non-volatile memory operatively connected to the processor, the non-volatile memory having instructions stored thereon. When the instructions are executed by the processor, they cause the processor to perform the following steps: activate the spectral engine to obtain a measurement of a portion of the ROI of the calibration plaque; calibrate the spectral engine with the obtained measurement; activate the camera to obtain an image of the calibration plaque, including the focus target; calculate a current blur detection value for the focus target by comparing reference calibration measurements and the current measurement; retrieve a predetermined calibration blur detection value from the non-volatile memory; and determine whether the current blur detection value is within a threshold tolerance of the predetermined calibration blur detection value.

In some embodiments, the predetermined calibration blur detection value excludes the ROI. In some embodiments, the predetermined calibration blur detection value includes the ROI.

The instructions for calculating a current blur detection value for the focus target may further comprise performing a Laplacian Operator on the obtained camera image of the calibration plaque. The instructions for calculating a current blur detection value for the focus target may further comprise performing a Fast Fourier Transform on the obtained camera image of the calibration plaque.

In some embodiments, the calibration blur detection value comprises a comparison of an image of a white calibration plaque and another instance of the single calibration plaque having a Region of Interest (ROI) and a focus target outside of the ROI.

### Description

A spectrophotometer is an example of a color measurement instrument. Many models of spectrophotometers have a camera for obtaining images of objects or surfaces being measured. In some examples, the camera is used for targeting purposes. In other examples, the camera is used to make color measurements. See, for example, PCT US 2018/037333, which is incorporated by reference in its entirety. In some examples, the camera is included to obtain texture images of target surfaces. See, for example, US 2018/0024005, which is incorporated by reference in its entirety. In some embodiments, the camera comprises optics and a color image sensor, such as a R, G, B sensor. In some embodiments, the camera comprises optics and a monochrome image sensor.

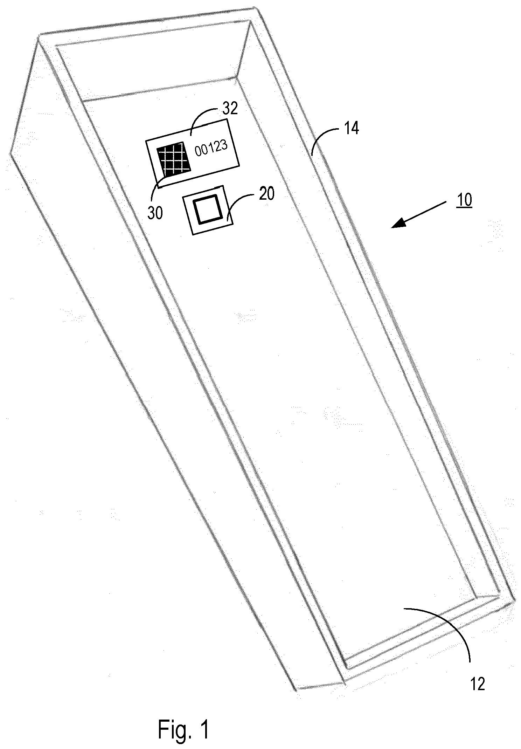

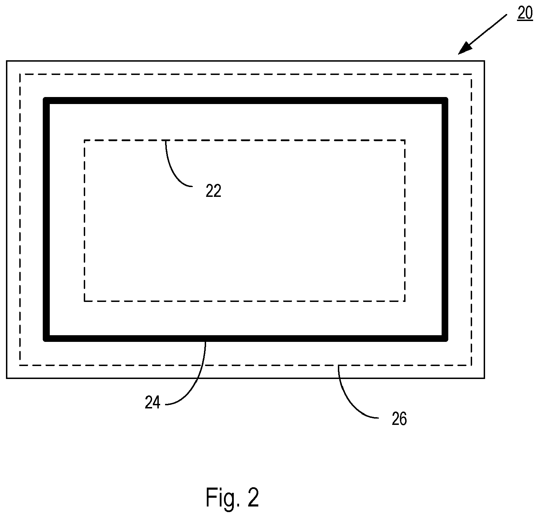

An example of a calibration plaque according to one example of the present invention is illustrated in Figures 1 and 2. A calibration cradle 10 comprises a bottom 12 and walls 14. In the bottom is a calibration plaque 20. The calibration plaque 20 may be covered by a movable door such that the calibration plaque 20 is covered when not in use and the door is opened and the calibration plaque 20 revealed when a color measurement instrument is placed in the cradle. The walls 14 and other features, such as a peg, cooperate to retain the color measurement instrument in proper orientation so that a region of interest of the calibration plaque is in the field of view of the color measurement optics of the color measurement instrument. The cradle 10 may further comprise a docking station, including circuitry for recharging batteries on the color measurement instrument.

Referring to Figure 2, the calibration plaque 20 comprises a Region of Interest 22 and a focus target 24. The focus target 24 is outside the Region of Interest 22, so as not to affect white calibration measurements in the Region of Interest 22. A color and shade of the focus target 24 is selected to have high contrast with the Region of Interest 22. In some embodiments, the focus target is black.

The camera of the color measurement instrument has a field of view 26. The camera field of view 26 encompasses the Region of Interest 22 and the focus target 24. In the illustrated example, the camera field of view 26 is smaller than the calibration plaque 20. However, in other embodiments, the camera field of view 26 is the same size as the calibration plaque 20 or the camera field of view 26 is larger than the calibration plaque 20. In some embodiments, the calibration plaque is a white tile, and a border of the tile surrounded by the cradle having a contrasting shade or color comprises the focus target 24.

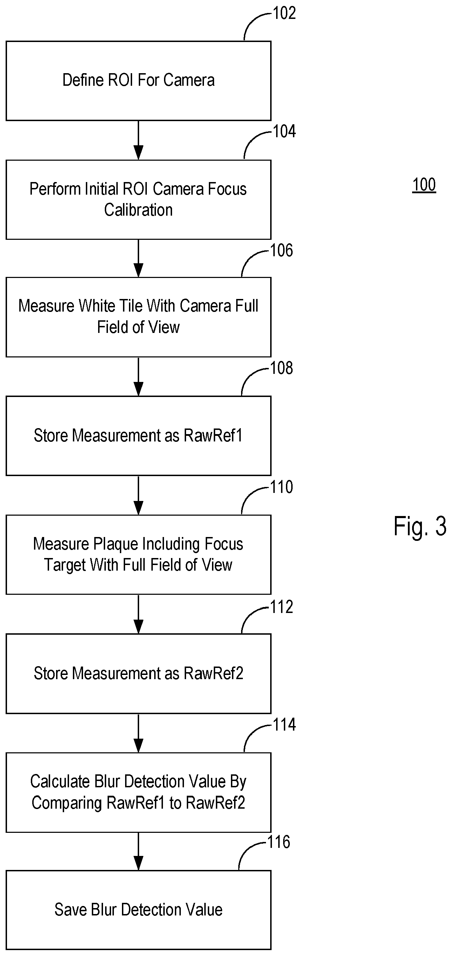

Referring to Figure 3, process 100 illustrates initial calibration of a color measurement instrument by a calibrator, such as the manufacturer of the instrument. In step 102, the calibrator defines the Region of Interest (ROI) 22 for the camera on the calibration plaque 20. The ROI is smaller than and wholly contained within the calibration plaque 20. The color measurement instrument is checked and/or adjusted such that the ROI 22 is in focus for the camera in step 104. This may be done with a conventional focus target in the ROI of the camera. At this stage, it may not be known whether the camera field of view excluding the ROI is in focus.

In step 106, the calibrator causes the color measurement instrument to measure a white plaque (no focus target) with the camera full field of view. This measurement is stored as Raw Reference 1 (RawRef1) in step 108. In step 110, the calibrator then causes the color measurement instrument to make a full field of view measurement of plaque 20 including a focus target 24. This measurement is stored as Raw Reference 2 (RawRef2) in step 112. In step 112, a reference blur detection value is calculated by comparing RawRef1 to RawRef2. The reference blur detection value is stored on the color measurement instrument in step 116.

In some embodiments, a Laplacian Operator is used on each camera measurement to determine the blur detection value. A Laplacian Operator is a derivative operator which is often used to find edges in an image. The Laplacian of an image highlights regions of rapid intensity change. In some embodiments, an image is smoothed with something approximating a Gaussian smoothing filter in order to reduce its sensitivity to noise before applying the Laplacian Operator. In other embodiments, other suitable processes for determining a level of blur are employed. For example, some embodiments include computing the Fast Fourier Transform of the image and then examining the distribution of low and high frequencies. If there are a low amount of high frequencies, then the image can be considered blurry. In some embodiments, the reference blur detection value may be performed with a single image including the focus target 24.

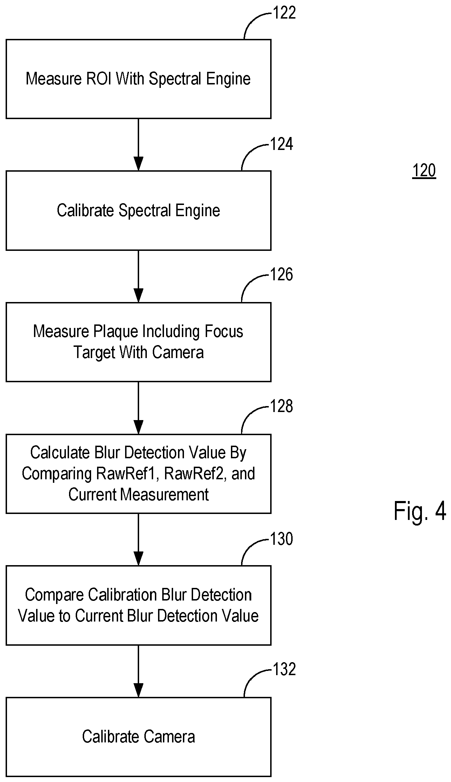

To check focus in the field, the focus of the camera is not directly measured within the ROI. Referring to Figure 4, a process for calibrating a color measurement in the field is illustrated. Typically, these steps would be performed with the instrument in a cradle 10 such as illustrated in Figure 1, or otherwise with the plaque in a fixed, known relationship with respect to the color measurement instrument. When calibration is initiated, either by user action or automatically by placement in the cradle, in step 122, the color measurement instrument measures a portion of the ROI 22 with the spectral engine. The color measurement instrument uses this measurement to calibrate the spectral engine in step 124. The color measurement instrument measures the plaque 20 with the camera. The field of view of the camera includes both the ROI 22 and the focus target 24. This may comprises a full field of view measurement. In step 128, the color measurement instrument calculates a blur detection value by comparing RawRef1, RawRef2, and the current measurement. In step 130, the color measurement instrument compares the calibration blur detection value (from process 100) to the current blur detection value. If the current blur detection value is within a threshold tolerance of the reference blur detection value, the camera is considered in focus. It will be appreciated that it is not necessary for the focus target to actually be in focus, and that some embodiments of the invention rely on a detection of a comparable amount of loss of focus outside the ROI to confirm focus within the ROI. If the current blur detection value is out of tolerance, the color measurement instrument calibrates the focus of the camera based on this comparison in step 132.

In some embodiments, spectral reference data corresponding to a physical calibration plaque is provided to an encoder. The encoder generates, for example, a bar code or QR-Code. The bar code or QR-Code is printed on a sticker and the sticker affixed next to the calibration plaque. A sticker with a QR-Code, for example, is a machine-readable object. Other information may be encoded as may be required by the calibration process. The QR codes can also hold additional information that may be relevant to the measurement system, for example, a version number, a serial number, and reflectance data for the white calibration plaque.

The color measurement instrument uses its camera to read the bar or QR code. Instructions are stored in the color measurement instrument, when run on a processor in the instrument, decode the spectral reference data. This data may be saved in non-volatile memory by the color measurement instrument prior to performing the calibration spectral reading of the calibration plaque.

In other embodiments, advantageously, any calibration data that the color measurement instrument would require to perform a proper calibration is automatically loaded to the instrument each time a calibration is performed. This reduces error customers might experience and basically makes their workflow simpler and error free. Also, because the spectral reference data is obtained during each calibration procedure, the spectral reference data need not be saved to non-volatile memory. Additionally, this approach allows users to determine if they have an instrument problem or calibration plaque issue if they have more than one calibration plaque in house.

In some embodiments, spectral calibration data associated with the calibration plaque 20 is encoded into a QR code 30 which is placed adjacent to the calibration plaque 20. The QR code 30 may be printed on a sticker 32. The sticker 32 may also include a serial number for a user to compare with a serial number on the color measurement instrument. The present invention is not limited to stickers; QR code 30 may be disposed adjacent the calibration plaque 20 by any method or means which makes the QR code visible and able to be read by a color measurement instrument. Other methods to store the calibration data with the calibration plaque could include RFID, NFC or data over the wireless charger connection or other technologies that allow the calibration data is stored with the docking station / calibration plaque and the instrument is capable of reading the calibration data when it is ready to calibrate. The instrument never needs to be "paired" with a calibration plaque, and the instrument can calibrate on *any* calibration plaque / docking station that can communicate its calibration data to the instrument using some data transfer means.

Embodiments of the present disclosure, for example, include color measurement systems comprising a special purpose or embedded general-purpose processor including for example, one or more processors and system memory. Embodiments within the scope of the present disclosure also include physical and other computer-readable media for carrying or storing processor-executable instructions and/or data structures. In particular, one or more of the processes or methods described herein may be implemented at least in part as instructions embodied in a non-transitory computer-readable medium and executable by one or more processing devices (e.g., any of the media content access devices described herein). In general, a processor (e.g., a microprocessor) receives instructions, from a non-transitory computer-readable medium, (e.g., a memory, etc.), and executes those instructions, thereby performing one or more processes or methods, including one or more of the processes or methods described herein.

Such devices also may include a computer-readable storage media reader, a communications device (e.g., a modem, a network card (wireless or wired), an infrared communication device, etc.), and working memory as described above. The computer-readable storage media reader may be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices may also include one or more software applications, modules including program modules, services, or other elements located within at least one working memory device, including an operating system and application programs, such as a client application or Web browser. It should be appreciated that alternate embodiments may have numerous variations from that described above. For example, customized hardware might also be utilized and/or particular elements might be implemented in hardware, software (including portable software, such as applets), or both. Further, connection to other computing devices such as network input/output devices may be employed.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes ROM, EEPROM, CD-ROM, solid state drives ("SSDs") (e.g., based on RAM), Flash memory, phase-change memory ("PCM'), other types of memory, other optical disk storage, magnetic disk storage or other magnetic storage devices, or any other medium which can be used to store desired program code means in the form of computer-executable instructions or data structures and which can be accessed by a general purpose or special purpose computer.

A digital communication interface, or network, is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed at a processor, cause a general-purpose computer, special purpose computer, or special purpose processing device to perform a certain function or group of functions. In some embodiments, computer-executable instructions are executed on a general-purpose computer to turn the general-purpose computer into a special purpose computer implementing elements of the disclosure. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

In the foregoing specification, the invention has been described with reference to specific exemplary embodiments thereof. Various embodiments and aspects of the invention(s) are described with reference to details discussed herein, and the accompanying drawings illustrate the various embodiments. The description above and drawings are illustrative of the invention and are not to be construed as limiting the invention. Numerous specific details are described to provide a thorough understanding of various embodiments of the present invention.

The present invention may be embodied in other specific forms without departing from its spirit or essential characteristics. The described embodiments are to be considered in all respects only as illustrative and not restrictive. For example, the methods described herein may be performed with less or more steps/acts or the steps/acts may be performed in differing orders. Additionally, the steps/acts described herein may be repeated or performed in parallel with one another or in parallel with different instances of the same or similar steps/acts. The scope of the invention is, therefore, indicated by the appended claims rather than by the foregoing description. All changes that come within the meaning and range of equivalency of the claims are to be embraced within their scope.

## Claims

1. A color measurement instrument for use with a single calibration plaque having a spectral target Region of Interest (ROI) and a focus target outside of the ROI, the color measurement instrument comprising:
a) a spectral engine;
b) a camera;
c) a processor, operatively connected to the spectral engine and the camera; and
d) a non-volatile memory operatively connected to the processor, the non-volatile memory having instructions stored thereon that, when executed by the processor, cause the processor to perform the following steps:
1) activate the spectral engine to obtain a measurement of a portion of the ROI of the calibration plaque;
2) calibrate the spectral engine with the obtained measurement;
3) activate the camera to obtain an image of the calibration plaque, including the focus target;
4) calculate a current blur detection value for the focus target by comparing reference calibration measurements and the current measurement;
5) retrieve a predetermined calibration blur detection value from the non-volatile memory; and
6) determine whether the current blur detection value is within a threshold tolerance of the predetermined calibration blur detection value.

2. The color measurement instrument of claim 1, wherein the predetermined calibration blur detection value excludes the ROI.

3. The color measurement instrument of claim 1, wherein the predetermined calibration blur detection value includes the ROI.

4. The color measurement instrument of claim 1, wherein the instructions for calculating a current blur detection value for the focus target further comprise performing a Laplacian Operator on the obtained camera image of the calibration plaque.

5. The color measurement instrument of claim 1, wherein the instructions for calculating a current blur detection value for the focus target further comprise performing a Fast Fourier Transform on the obtained camera image of the calibration plaque.

6. The color measurement instrument of claim 1, wherein the calibration blur detection value comprises a comparison of an image of a white calibration plaque and another instance of the single calibration plaque having a Region of Interest (ROI) and a focus target outside of the ROI.

7. A color measurement system, comprising the color measurement instrument of claim 1 and a single calibration plaque having a spectral target Region of Interest (ROI) and a focus target outside of the ROI.

8. The color measurement system of claim 7, wherein the spectral target ROI is white.

9. The color measurement system of claim 7, wherein the focus target is black.
